# FASCICULE DE BREVET EUROPEEN

(11) **EP 2 210 127 B1**
(45) Date de publication et mention de la délivrance du brevet: **21.09.2011**
(21) Numéro de dépôt: 08853998.6
(22) Date de dépôt: 07.11.2008
(51) Int. Cl.: G01S 15/00

(54) **BARRIÈRE ACOUSTIQUE SOUS-MARINE**
UNTERWASSERSCHALLSCHUTZ
UNDERWATER ACOUSTIC BARRIER

(30) Priorité: 13.11.2007 FR 0758992
(43) Date de publication de la demande: 28.07.2010
(73) Titulaire: Nato Undersea Research Centre, 19138 La Spezia (IT)
(72) Inventeur: FOLEGOT, Thomas, I-19038 Sarzana (IT); STEVENSON, J., Mark, San Diego, CA 92106 (US)
(74) Mandataire: Jacobson, Claude
(86) Numéro de dépôt international: PCT/FR2008/052011
(87) Numéro de publication internationale: WO 2009/068795

(56) Documents cités:
- DE-A1-102005 007 207
- US-A- 4 349 897
- US-A- 4 939 702
- US-A- 5 235 558
- US-A- 5 305 286

## Description

La présente invention concerne une barrière acoustique sous-marine.

Ce type de barrières acoustiques trouve de nombreuses applications, notamment dans le domaine de la surveillance de ports ou autres installations de ce type.

On a déjà développé dans l'état de la technique pour assurer ces missions, des systèmes équivalents à ces barrières et qui sont basés sur l'utilisation de sonars.

Un sonar est en fait constitué d'une source acoustique raccordée à des moyens de génération de signaux pour émettre un signal acoustique dans un volume à surveiller et d'au moins un récepteur acoustique correspondant destiné à acquérir des échos renvoyés par des cibles situées dans le volume pour détecter et localiser celles-ci.

Cependant, ces sonars présentent un certain nombre d'inconvénients notamment au niveau de leur sensibilité à la réverbération et au bruit ambiant en particulier lorsqu'ils sont implantés dans des ports ou similaires et du fait que n'utilisant qu'une seule source, le volume à surveiller n'est que partiellement insonifié par celle-ci en fonction des conditions de propagation.

De plus ces sonars n'ont qu'une faible capacité de discrimination notamment en présence de plusieurs cibles lorsque la propagation présente de multiples trajets acoustiques.

Le but de l'invention est donc de résoudre ces problèmes.

A cet effet, l'invention a pour objet une barrière acoustique sous-marine, comportant :
- au moins une source acoustique raccordée à des moyens de génération de signaux, et placée d'un côté de la barrière,
- plusieurs récepteurs acoustiques disposés de l'autre côté de la barrière en regard de ladite au moins une source et raccordés à des moyens d'acquisition des signaux issus de celle-ci après propagation dans la barrière,
- des moyens de calcul de l'énergie reçue pour chacun des trajets acoustiques définis dans la barrière entre la source et des récepteurs associés en au moins une antenne,
- des moyens de combinaison des énergies calculées pour mettre en évidence au moins une corrélation spatiale de perte d'énergie représentative d'au moins une intrusion dans la barrière et permettant de localiser et de dimensionner celle-ci, caractérisée en ce que
- les moyens de combinaison comprennent des moyens formant modèle de propagation acoustique de la barrière recevant en entrée d'une part des données d'environnement de la barrière et d'autre part des informations relatives aux énergies calculées afin de construire une image acoustique des pertes d'énergie de la barrière, faisant apparaître ladite au moins une intrusion.

Le document DE 10 2005 007 207 A1 décrit une barrière acoustique sous-marine selon le préambule de la revendication 1.

Suivant des modes particuliers de réalisation, la barrière comporte l'une ou plusieurs des caractéristiques suivantes, prise(s) isolément ou selon toutes les combinaisons techniquement possibles :
- elle comporte plusieurs sources acoustiques placées d'un côté de celle-ci,
- elle comporte des moyens de traitement de l'image pour optimiser la résistance de la barrière aux fausses détections,
- les données d'environnement de la barrière comprennent des données de bathymétrie, des données de hauteur d'eau, des données de température de celle-ci et des données de positions de la ou de chaque source et de chaque récepteur.

L'invention sera mieux comprise à l'aide de la description qui va suivre, donnée uniquement à titre d'exemple et faite en se référant aux dessins annexés sur lesquels :
- la figure 1 représente un schéma synoptique d'implantation d'un exemple de réalisation d'une barrière acoustique sous-marine selon l'invention ;
- la figure 2 illustre le principe de détection d'une intrusion dans une telle barrière ;
- la figure 3 représente un schéma synoptique illustrant la structure des moyens électroniques intégrés dans une telle barrière ;
- la figure 4 illustre le calcul d'énergie dans différents trajets acoustiques, mis en oeuvre dans une barrière selon l'invention ; et
- les figures 5 et 6 illustrent des images acoustiques de pertes d'énergie d'une barrière selon l'invention faisant apparaître une et deux intrusions respectivement.

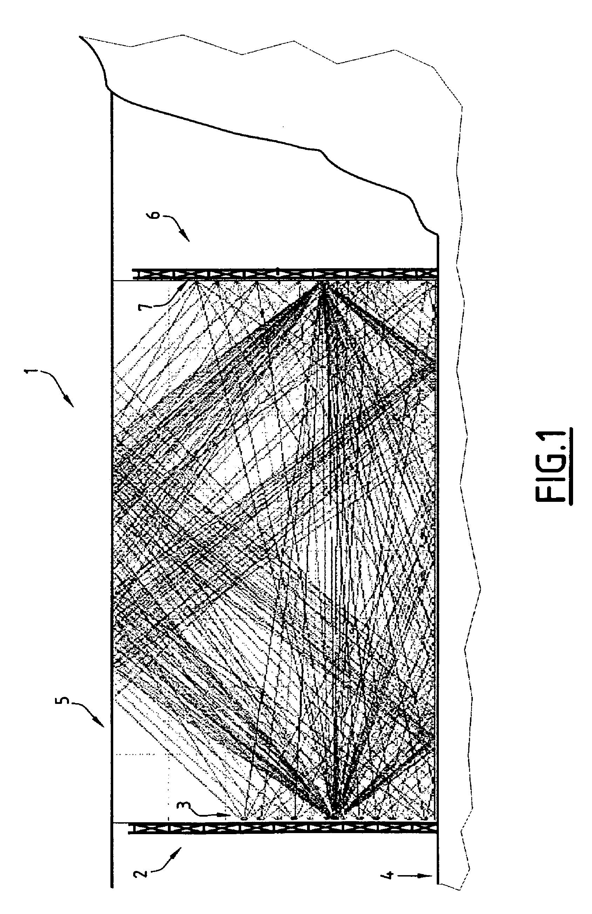

On a en effet illustré sur la figure 1, un exemple de réalisation d'une barrière acoustique sous-marine selon l'invention.

Cette barrière acoustique est désignée par la référence générale 1 sur cette figure et peut par exemple être implantée dans un chenal d'accès à un port ou autre.

En fait, cette barrière comporte d'un côté, des moyens formant source acoustique raccordés à des moyens de génération de signaux pour insonifier un volume d'eau de la barrière comme cela sera décrit plus en détail par la suite.

Ces moyens formant source acoustique comprennent au moins une source acoustique. Dans l'exemple de réalisation illustré sur cette figure les moyens formant source acoustique sont désignés par la référence générale 2 et comprennent en fait une ou un réseau de plusieurs sources, dont l'une est désignée par la référence générale 3 sur cette figure, ces sources étant placées dans un plan vertical à distance les unes des autres à partir par exemple du fond du chenal désigné par la référence générale 4 et sur une certaine hauteur en direction de la surface de l'eau désignée par la référence générale 5.

Ces sources sont par exemple à peu prés alignées.

De l'autre côté de la barrière, il est prévu des moyens formant récepteur acoustique désignés par la référence générale 6 sur cette figure, comprenant en fait plusieurs récepteurs acoustiques dont l'un est par exemple désigné par la référence générale 7 sur cette figure, qui sont donc placés à distance et en regard des moyens formant source et qui sont raccordés à des moyens d'acquisition des signaux issus de ces moyens formant source après propagation dans la barrière.

Il apparaît ainsi que la barrière acoustique sous-marine selon l'invention ne fonctionne pas à la manière d'un sonar sur la base des échos mais bien sur l'analyse d'une propagation vers l'avant des signaux acoustiques entre la source et les récepteurs à travers la barrière.

On conçoit alors, comme cela est illustré sur cette figure 1, qu'une multitude de trajets acoustiques est obtenue dans le volume de la barrière entre les différentes sources et les différents récepteurs.

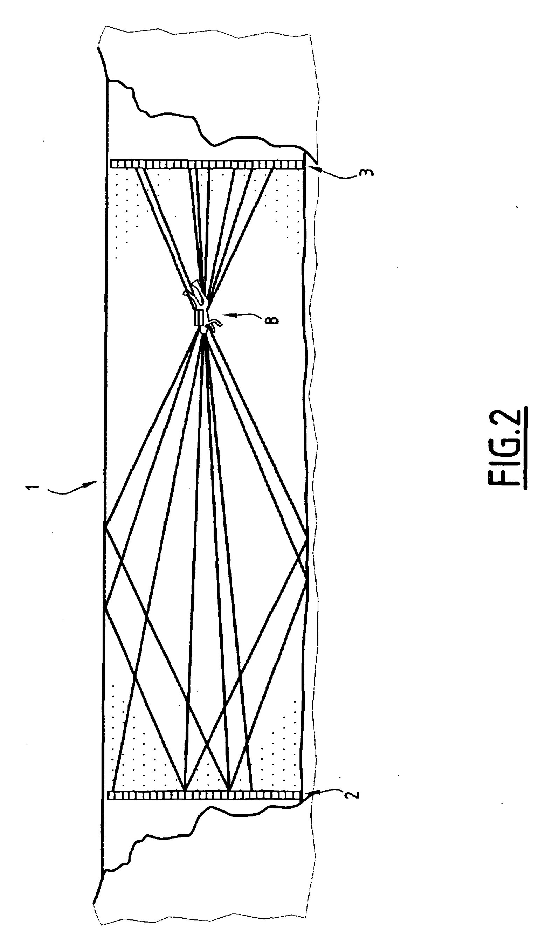

Une analyse d'énergie qui sera décrite plus en détail par la suite, permet non seulement de détecter mais également de localiser et de dimensionner une cible franchissant cette barrière comme cela est illustré sur la figure 2, dans laquelle un plongeur désigné par la référence générale 8 sur cette figure, franchit la barrière 1 entre les moyens formant source 2 et les moyens formant récepteur 6 et crée ainsi une perturbation dans la propagation des signaux acoustiques entre les moyens formant émetteur et les moyens formant récepteur. Selon la position du plongeur dans la barrière, cette perturbation altère des trajets de propagations directes entre émetteurs et récepteurs et des trajets de propagations réfléchies sur la surface de l'eau ou sur le fond du chenal comme cela est illustré.

On notera également que la multiplication du nombre de sources associée à l'utilisation des réflexions sur le fond et la surface permettent d'obtenir une très bonne insonification du volume de la barrière et de multiplier le nombre de trajets acoustiques qui seront altérés lors de l'intrusion ce qui permet d'augmenter la sensibilité de cette barrière.

Une telle structure permet également de s'affranchir des problèmes de rapport signal sur bruit classiques rencontrés avec les sonars qui utilisent des échos issus des cibles, les signaux effectuant alors un trajet aller/retour.

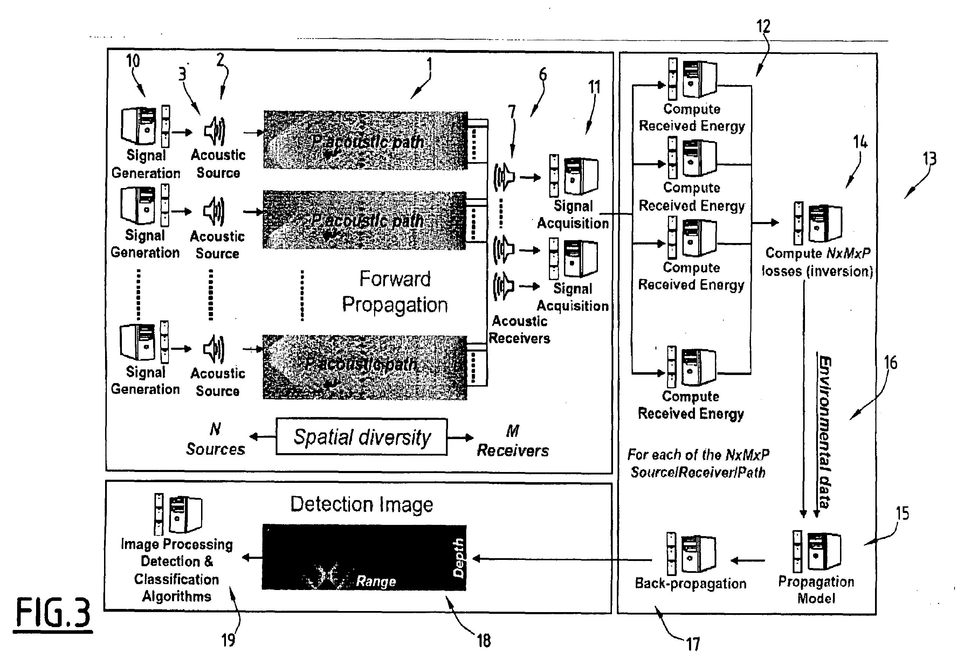

On a illustré sur la figure 3 un schéma synoptique des moyens électroniques entrant dans la constitution d'une telle barrière.

On reconnaît en effet sur cette figure 3, la barrière désignée par la référence générale 1, les moyens formant source acoustique désignés par la référence générale 2 comprenant par exemple au moins une source désignée par la référence générale 3, et raccordés à des moyens de génération de signaux désignés par la référence générale 10 sur cette figure. Comme cela a été indiqué précédemment, les moyens formant source sont placés d'un côté de la barrière. Bien entendu plusieurs sources peuvent être intégrées dans ces moyens formant source comme par exemple N sources discrètes.

De l'autre côté de la barrière on retrouve les différents récepteurs 7 des moyens formant récepteur 6, ces récepteurs étant par exemple au nombre de M et étant placés en regard des moyens formant source. Ces récepteurs sont raccordés à des moyens d'acquisition des signaux issus des moyens formant source après propagation dans la barrière. Ces moyens d'acquisition sont désignés par la référence générale 11 sur cette figure 3 et sont raccordés à des moyens 12 de calcul de l'énergie reçue pour chacun des trajets acoustiques définis dans la barrière entre la ou chaque source et des récepteurs associés en au moins une antenne de façon classique.

Ainsi l'énergie est calculée pour chaque trajet entre chaque source et chaque antenne formée de plusieurs récepteurs associés de façon classique.

La sortie de ces moyens de calcul est reliée à des moyens de combinaison des énergies ainsi calculées, ces moyens étant désignés par la référence générale 13 sur cette figure et permettant de mettre en évidence au moins une corrélation spatiale de perte d'énergie représentative d'au moins une intrusion dans la barrière et permettant de localiser et de dimensionner celle-ci.

En fait et comme cela est illustré dans l'exemple de réalisation décrit sur cette figure 3, ces moyens de combinaison 13 peuvent comporter des moyens 14 d'inversion des énergies calculées par les moyens 12 pour les traduire en pertes de transmission d'énergie acoustique. Ces pertes sont ensuite transmises à des moyens formant modèle de propagation désignés par la référence générale 15 recevant donc en entrée d'une part ces informations et d'autre part des données d'environnement de la barrière telles que désignées par la référence générale 16 sur cette figure.

Ces données d'environnement comprennent par exemple des informations relatives à la bathymétrie, à la hauteur d'eau, à la température de celle-ci, à la position des moyens formant source et des moyens formant récepteur, etc....

En sortie ces moyens formant modèle de propagation sont raccordés à des moyens désignés par la référence générale 17 de construction d'une image acoustique des pertes d'énergie de la barrière, faisant apparaître ladite au moins une intrusion.

L'image ainsi reconstruite est illustrée sur cette figure 3 et est désignée par la référence générale 18.

Enfin des moyens de traitement d'image désignés par exemple par la référence générale 19 sur cette figure 3 peuvent être utilisés pour optimiser la résistance de la barrière aux fausses détections.

Ces moyens peuvent présenter n'importe quelle structure appropriée.

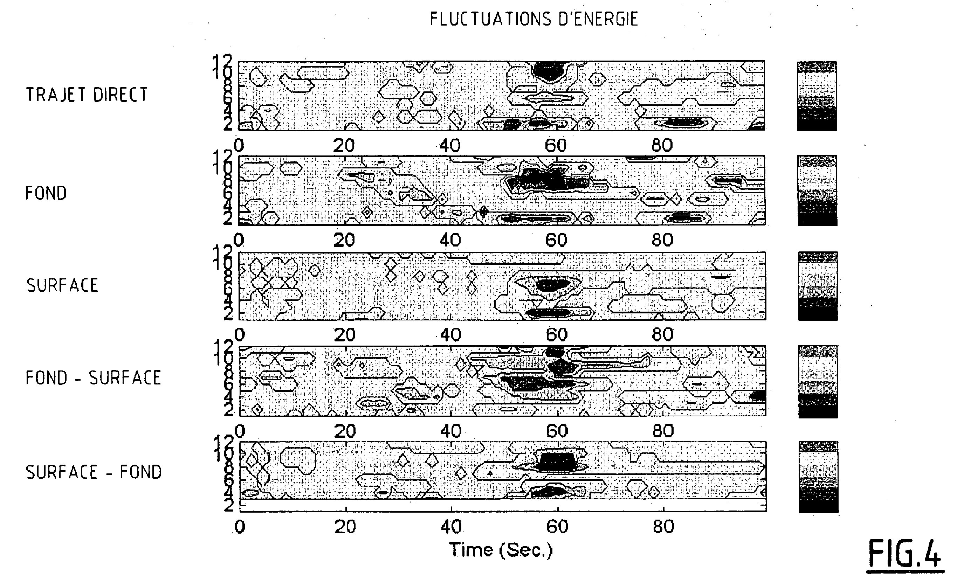

Comme cela a été indiqué précédemment notamment en regard de la figure 2, une intrusion dans une barrière selon l'invention, provoque la création d'ombres sur des récepteurs et donc une perte d'énergie transmise à destination de ceux-ci par la ou les sources. Cette intrusion a donc des répercussions sur différents trajets acoustiques entre la ou chaque source et la ou chaque antenne, ce qui se traduit par des variations d'énergie reçue comme cela est par exemple illustré sur la figure 4.

Une intrusion provoque en effet une ombre sur certains récepteurs et sur certains trajets.

En effet et comme cela est illustré sur cette figure 4, qui illustre le cas d'une intrusion aux environs de 60 s, on s'aperçoit que cette intrusion a des répercussions dans le trajet direct pour la source par exemple 10 et des répercussions pour d'autres sources sur d'autres trajets, comme par exemple la source 8 pour un trajet réfléchi une fois sur le fond, la source 8 également pour un trajet réfléchi une fois à la surface etc...

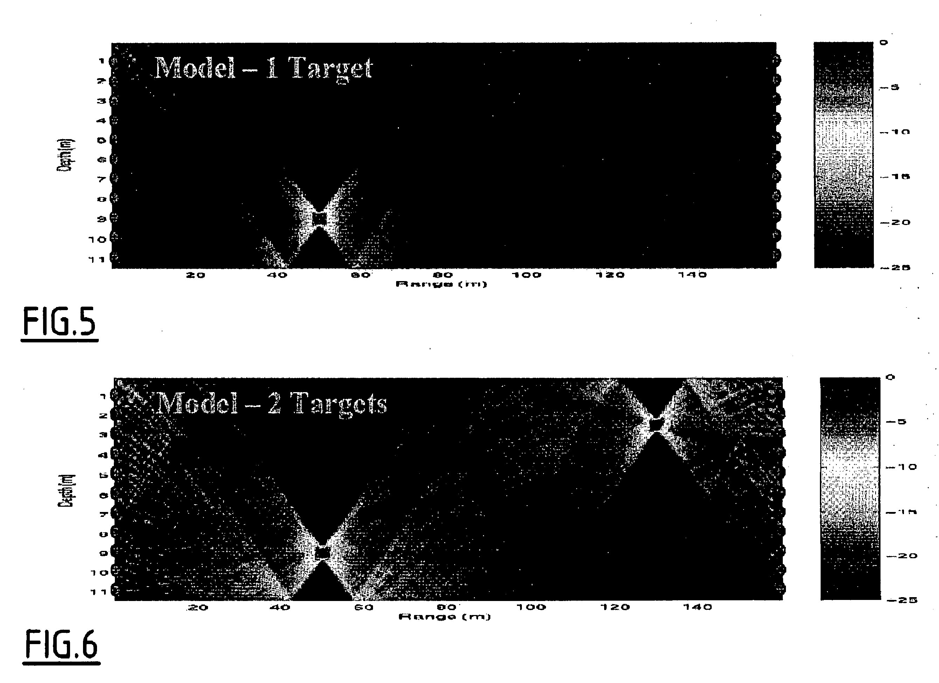

On conçoit alors qu'une combinaison de ces différentes énergies calculées permet de mettre en évidence une corrélation spatiale de perte d'énergie représentative d'au moins une intrusion dans la barrière ce qui permet non seulement de détecter cette intrusion mais également de la localiser et de la dimensionner en reconstruisant une image acoustique des pertes d'énergie comme cela est illustré sur les figures 5 et 6 respectivement pour une intrusion de la barrière par un seul objet (figure 5) ou deux objets (figure 6).

Ces figures représentent effectivement une image par exemple en deux dimensions distance entre source et récepteur sur profondeur de la barrière.

On conçoit ainsi qu'une barrière selon l'invention présente un certain nombre d'avantages notamment au niveau de l'insonification du volume contrôlé, de l'utilisation des trajets après réflexion, de son indépendance vis-à-vis du bruit ambiant, etc...

Une telle barrière trouve également de nombreuses applications pour permettre par exemple la surveillance de ports ou autres, la détection de pollution, etc...

Bien entendu différents modes de réalisation de cette barrière peuvent être envisagés. Ainsi par exemple des sources et des récepteurs peuvent être disposés de chaque côté de cette barrière, la propagation des signaux se faisant alors dans les deux sens de la barrière.

De même il doit également être entendu que de façon connue en soi les principes de réciprocité de la propagation acoustique permettraient de considérer les sources comme des récepteurs et réciproquement dans le cadre des calculs d'énergie.

## Revendications

1. Barrière acoustique sous-marine, comportant :
- au moins une source acoustique (3) raccordée à des moyens (10) de génération de signaux, et placée d'un côté de la barrière,
- plusieurs récepteurs acoustiques (7) disposés de l'autre côté de la barrière en regard de ladite au moins une source et raccordés à des moyens (11) d'acquisition des signaux issus de celle-ci après propagation dans la barrière,
- des moyens (12) de calcul de l'énergie reçue pour chacun des trajets acoustiques définis dans la barrière entre la source et des récepteurs associés en au moins une antenne,
- des moyens (13) de combinaison des énergies calculées pour mettre en évidence au moins une corrélation spatiale de perte d'énergie représentative d'au moins une intrusion dans la barrière et permettant de localiser et de dimensionner celle-ci,
**caractérisée en ce que** les moyens de combinaison (13) comprennent des moyens (15) formant modèle de propagation acoustique de la barrière recevant en entrée d'une part des données (16) d'environnement de la barrière et d'autre part des informations relatives aux énergies calculées afin de construire une image acoustique des pertes d'énergie (18) de la barrière, faisant apparaître ladite au moins une intrusion.

2. Barrière acoustique selon la revendication 1, **caractérisée en ce qu'**elle comporte plusieurs sources acoustiques placées d'un côté de celle-ci.

3. Barrière acoustique selon la revendication 1 ou 2, **caractérisée en ce qu'**elle comporte des moyens (19) de traitement de l'image (18) pour optimiser la résistance de la barrière aux fausses détections.

4. Barrière acoustique selon l'une quelconque des revendications précédentes, **caractérisée en ce que** les données d'environnement de la barrière comprennent des données de bathymétrie, des données de hauteur d'eau, des données de température de celle-ci et des données de positions de la ou de chaque source et de chaque récepteur.

## Claims

1. Underwater acoustic barrier comprising:
- at least one acoustic source (3) connected to means (10) for generating signals and placed on one side of the barrier,
- several acoustic receivers (7) arranged on the other side of the barrier facing the said at least one source and connected to means (11) for acquiring signals derived therefrom after propagation in the barrier,
- means (12) for computing the received energy for each of the acoustic pathways defined in the barrier between the source and receivers associated in at least one antenna,
- means (13) for combining the computed energies to evidence at least one spatial correlation of energy loss representing at least one intrusion into the barrier and allowing the locating and sizing thereof,
**characterized in that** the combining means (13) comprise means (15) forming a model of acoustic propagation of the barrier receiving on their input firstly environmental data (16) on the barrier and secondly data on the computed energies in order to construct an acoustic image of energy losses (18) of the barrier showing the said at least one intrusion.

2. The acoustic barrier according to claim 1, **characterized in that** it comprises several acoustic sources placed on one side thereof.

3. The acoustic barrier according to claim 1 or 2, **characterized in that** it comprises means (19) for processing the image (18) to optimize the resistance of the barrier to false detections.

4. The acoustic barrier according to any of the preceding claims, **characterized in that** the environmental data on the barrier comprise bathymetry data, water height data, water temperature data, and data on the positions of the or of each source and of each receiver.

## Patentansprüche

1. Akustische Unterseebarriere, die aufweist.
- mindestens eine akustische Quelle (3), die an Mittel (10) zum Erzeugen von Signalen angeschlossen und auf einer Seite der Barriere angeordnet ist,
- mehrere akustische Empfänger (7), die auf der anderen Seite der Barriere gegenüber der mindestens einen Quelle angeordnet und an Mittel (11) zum Empfang von Signalen, die von ihr nach Verbreitung in der Barriere ausgehen, angeschlossen sind,
- Mittel (12) zur Berechnung der empfangenden Energie für jeden der akustischen Wege, die in der Barriere zwischen der Quelle und den in mindestens einer Antenne verbundenen Empfängern definiert sind,
- Mittel (13) zur Kombination der berechneten Energien, um mindestens eine räumliche Korrelation des Energieverlusts zu ermitteln, die für mindestens ein Eindringen in die Barriere repräsentativ ist und erlaubt, diese zu lokalisieren und zu dimensionieren,
**dadurch gekennzeichnet, dass** die Mittel (13) zur Kombination Mittel (15) umfassen, die ein Modell der akustischen Ausbreitung der Barriere bilden, die am Eingang einerseits Daten (16) aus dem Umfeld der Barriere empfangen und andererseits Informationen über die berechneten Energien, um ein akustisches Bild der Energieverluste (18) der Barriere zu konstruieren, wobei das mindestens eine Eindringen abgebildet wird.

2. Akustische Barriere nach Anspruch 1, **dadurch gekennzeichnet, dass** sie mehrere akustische Quellen aufweist, die auf einer Seite von ihr angeordnet sind

3. Akustische Barriere nach Anspruch 1 oder 2, **dadurch gekennzeichnet, dass** sie Mittel (19) zur Verarbeitung des Bildes (18) aufweist, um den Widerstandsfähigkeit der Barriere gegenüber Falscherkennung zu optimieren.

4. Akustische Barriere nach einem der vorangehenden Ansprüche, **dadurch gekennzeichnet, dass** die Umfelddaten der Barriere Bathymetriedaten, Wasserstandsdaten, Wassertemperaturdaten und Positionsdaten der oder jeder Quelle und von jedem Empfänger umfassen.
